Europäisches Patentamt

**European Patent Office**

Office européen des brevets

(19)

(11) Numéro de publication : **0 063 994**
**B1**

(12)
# FASCICULE DE BREVET EUROPÉEN

(45) Date de publication du fascicule du brevet :
**28.08.85**

(51) Int. Cl.⁴ : **G 21 C 15/18**

(21) Numéro de dépôt : **82400671.2**

(22) Date de dépôt : **15.04.82**

(54) **Dispositif de refroidissement de secours d'un réacteur nucléaire à eau sous pression.**

(30) Priorité : **17.04.81 FR 8107834**

(43) Date de publication de la demande :
**03.11.82 Bulletin 82/44**

(45) Mention de la délivrance du brevet :
**28.08.85 Bulletin 85/35**

(84) Etats contractants désignés :
**BE DE FR GB IT**

(56) Documents cités :
**FR-A- 2 227 603**
**FR-A- 2 251 884**
**GB-A- 1 178 380**
**US-A- 3 847 735**
**US-A- 3 865 688**
**ENERGIE NUCLEAIRE, vol. 14, no. 3, mai-juin 1972, RUEIL-MALMAISON (FR), D. KNÖDLER: "Les réacteurs à eau sous pression en R.F.A.", pages 180-189**
**SCIENCE PROGRES DECOUVERTE, vol. 18, no. 3447, septembre 1972, PARIS (FR), G. LEZER: "Rendre sûres les centrales nucléaires"**
**KERNTECHNIK, vol. 17, no. 4, 1975, MUNICH (DE), E. DRESSLER et al.: "Zuverlässigkeitsuntersuchung von Sicherheitssystemen des Kernkraftwerks Biblis, Block A", pages 160-167**

(73) Titulaire : **FRAMATOME ET CIE.**
**Tour Fiat 1, Place de la Coupole**
**F-92400 Courbevoie (FR)**

(72) Inventeur : **Gandrille, Jean-Luc**
**26 rue Paul Olivier**
**F-92500 Rueil Malmaison (FR)**
Inventeur : **Bonhomme, Nicolas**
**104 rue St-Jean**
**F-95300 Pontoise (FR)**

(74) Mandataire : **Lavoix, Jean et al**
**c/o Cabinet Lavoix 2, Place D'Estienne D'Orves**
**F-75441 Paris Cedex 09 (FR)**

Jouve, 18, rue St-Denis, 75001 Paris, France

## Description

L'invention concerne un dispositif de refroidissement de secours d'un réacteur nucléaire à eau sous pression par injection d'un liquide de refroidissement dans le circuit primaire du réacteur.

Le circuit primaire d'un réacteur nucléaire en cours de fonctionnement renferme de l'eau contenant de l'acide borique à une pression voisine de 155 bars qui sert à la fois au refroidissement du cœur du réacteur disposé dans la cuve et au contrôle de la réactivité de ce cœur.

Le circuit primaire du réacteur sur lequel sont disposés les générateurs de vapeur sert également au transport de la chaleur du cœur du réacteur vers ces générateurs de vapeur où a lieu la vaporisation de l'eau alimentaire par échange de chaleur avec l'eau primaire.

Si le circuit primaire présente une fuite, il est nécessaire de compenser celle-ci par une injection d'eau additionnelle dans ce circuit primaire. Dans le cas d'une fuite très importante et par exemple d'une rupture franche d'une conduite du circuit primaire, il est nécessaire d'envoyer de très grandes quantités de liquide de refroidissement constitué par de l'eau additionnée d'acide borique, en un temps très court, pour éviter une élévation de température très importante du cœur pouvant conduire à une fusion de celui-ci.

Dans le cas d'une faible fuite accompagnée d'une dépressurisation très faible du circuit primaire, on injecte de l'eau de refroidissement à une pression supérieure à la pression nominale du circuit primaire, grâce à un circuit spécial appelé circuit de contrôle volumétrique disposé à l'extérieur de l'enceinte de sécurité dans laquelle est placée la cuve du réacteur.

Dans le cas de fuites plus importantes, il devient nécessaire de mettre en œuvre un dispositif de refroidissement de secours du réacteur par injection de liquide de refroidissement, appelé système d'injection de sécurité.

Un tel système d'injection de sécurité comporte généralement un ensemble d'accumulateurs renfermant du liquide réfrigérant sous une pression voisine de 40 bars disposés à l'intérieur de l'enceinte de sécurité du réacteur et deux circuits d'injection indépendants disposés à l'extérieur de l'enceinte de sécurité.

Les accumulateurs renfermant de l'eau de refroidissement à 40 bars, généralement appelés accumulateurs à moyenne pression, sont mis en communication avec les branches froides de chacune des boucles du circuit primaire avec interposition d'un clapet dont l'ouverture se produit au moment où la pression dans le circuit primaire tombe en dessous de la pression de l'accumulateur. Ces accumulateurs sont constitués par une réserve d'eau en équilibre de température avec l'intérieur de l'enceinte de sécurité et au-dessus de laquelle un gaz tel que de l'azote comprimé maintient une pression un peu supérieure à 40 bars.

Les moyens d'injection disposés en dehors de l'enceinte de sécurité comportent au moins un double circuit équipé de pompes haute ou moyenne pression et au moins un double circuit équipé de pompes basse pression alimentés l'un et l'autre en eau de refroidissement par le réservoir de stockage d'eau boriquée des piscines du réacteur.

La pression de fonctionnement nominale des pompes haute ou moyenne pression équipant le ou les circuits d'injection est voisine de 100 bars dans le cas d'un réacteur nucléaire à quatre boucles d'une puissance de 1 300 MW, alors que la pression de fonctionnement nominale des pompes basse pression est inférieure à 20 bars.

Dans le cas d'une brèche importante sur le circuit primaire du réacteur, les circuits d'injections et l'accumulateur moyenne pression interviennent très rapidement pour introduire de grandes quantités d'eau dans le circuit primaire pour éviter la dégradation des assemblages combustibles constituant le cœur du réacteur sous l'effet d'un échauffement trop important et pour maintenir une possibilité de refroidissement ultérieur du cœur par circulation d'un liquide de refroidissement.

L'intervention des accumulateurs est cependant limitée à une période très courte suivant l'apparition de la rupture sur le circuit primaire. Cette période peut être inférieure à une minute.

Pendant ce temps très court, le circuit primaire est passé de la pression nominale de fonctionnement, c'est-à-dire 155 bars à une pression faible de l'ordre de quelques bars.

Cependant, le cœur du réacteur et l'ensemble de la cuve qui le renferme sont encore à une température élevée, si bien qu'il est nécessaire de maintenir en fonctionnement le circuit d'injection basse pression pendant une durée qui peut être assez longue pour obtenir le refroidissement du réacteur.

Il est donc nécessaire d'utiliser au moins deux systèmes différents d'injection par pompe à des pressions différentes disposés au dehors de l'enceinte de sécurité du réacteur.

Ces matériels utilisés pour la sécurité du réacteur doivent répondre à des conditions très strictes en ce qui concerne leur conception et, en particulier chacun des systèmes est double.

Il est évidemment possible d'utiliser le circuit de contrôle volumétrique pour assurer l'injection à haute pression en cas de rupture sur le circuit primaire mais il faut alors une conception tout à fait spéciale du circuit de contrôle volumétrique pour qu'il puisse répondre aux conditions exigées pour un système de sécurité.

Dans tous les cas, l'investissement nécessaire pour les circuits d'injection de sécurité et la complexité de ces circuits sont très importants.

D'autre part, le circuit d'injection basse pression contribue à assurer, dès que la pression du circuit primaire est tombée à une valeur faible, le remplissage en eau de refroidissement de la cuve, et en particulier le renoyage du cœur, c'est à dire le rétablissement d'une immersion complète de celui-ci dans l'eau et son refroidissement ultérieur par circulation d'eau. Ces fonctions extrêmement importantes doivent être effectuées par un circuit de sécurité qui se trouve à l'extérieur de l'enceinte du réacteur et en conséquence, la conception de ce circuit doit être prévue pour obtenir une sécurité de fonctionnement extrêmement bonne.

On a également proposé d'utiliser des systèmes de sécurité à déclenchement automatique disposés dans l'enceinte de sécurité du réacteur, mais ces dispositifs ne sont pas capables de répondre à tous les cas d'accidents, en particulier dans le cas de brèches de taille importante sur une branche froide du circuit primaire. Il faut adjoindre à ces dispositifs à déclenchement automatique, des matériels actifs tels que des moyens de pompage éventuellement intégrés dans l'enceinte du réacteur.

Le but de l'invention est donc de proposer un dispositif de refroidissement de secours d'un réacteur nucléaire à eau sous pression par injection d'un liquide de refroidissement dans le circuit primaire du réacteur, en cas de fuite sur ce circuit primaire, comportant au moins un double circuit d'injection équipé d'un moyen de pompage et disposé à l'extérieur de l'enceinte du réacteur et au moins un ensemble d'accumulateurs contenant une certaine quantité de liquide de refroidissement sous pression disposés à l'intérieur de l'enceinte de sécurité du réacteur et communiquant avec les branches froides du circuit primaire par où l'eau sous pression arrive à la cuve du réacteur, par l'intermédiaire d'un clapet dont l'ouverture provoque l'injection de liquide de refroidissement dans le circuit primaire, ce dispositif de refroidissement de secours devant permettre de répondre à tous les cas d'accidents pouvant se produire, même les plus graves, sans utilisation d'un système complet d'injection par pompe comportant des sous-ensembles permettant des injections à des pressions différentes disposés en dehors de l'enceinte de sécurité du réacteur.

Dans ce but, le dispositif de refroidissement suivant l'invention comporte en dérivation sur chacune des branches froides du circuit primaire, avec interposition d'un clapet et indépendamment l'un de l'autre :

— un premier accumulateur de liquide réfrigérant à une première pression P1 inférieure à la pression nominale du circuit primaire, et un second accumulateur de liquide réfrigérant à une seconde pression P2 faible inférieure à la pression P1, l'injection de liquide réfrigérant par l'un et l'autre des accumulateurs dans le circuit primaire étant provoquée par l'ouverture automatique des clapets correspondants, lorsque la pression dans le circuit primaire tombe en dessous de P1 et en dessous de P2 respectivement et le moyen de pompage de chacun des circuits doubles d'injection comporte deux pompes disposées en série sur une canalisation communiquant à l'amont avec une réserve de liquide de réfrigération et à l'aval avec le circuit primaire du réacteur, la pompe disposée à l'aval ayant une pression nominale de fonctionnement très supérieure à la pression nominale de fonctionnement de la pompe disposée à l'amont dont le refoulement est en communication avec l'aspiration de la pompe disposée à l'aval, une portion de circuit en dérivation par rapport à la pompe d'aval munie d'une vanne de fermeture permettant également la mise en communication directe de la pompe d'amont avec le circuit primaire.

Afin de bien faire comprendre l'invention, on va maintenant décrire à titre d'exemple non limitatif, en se référant aux figures jointes en annexe, un dispositif de refroidissement de secours suivant l'invention.

La figure 1 représente une vue schématique de la cuve d'un réacteur nucléaire à eau sous pression, de deux boucles du circuit primaire dont l'une est rompue au niveau de sa branche froide et d'une partie d'un système de sécurité suivant l'art antérieur.

La figure 2 représente le dispositif de refroidissement de secours suivant l'invention associé à un réacteur nucléaire à eau sous pression à quatre boucles.

La figure 3 représente les débits injectés par les divers éléments du dispositif de refroidissement suivant l'invention, en fonction du temps, en prenant comme origine une rupture d'une branche froide du circuit primaire.

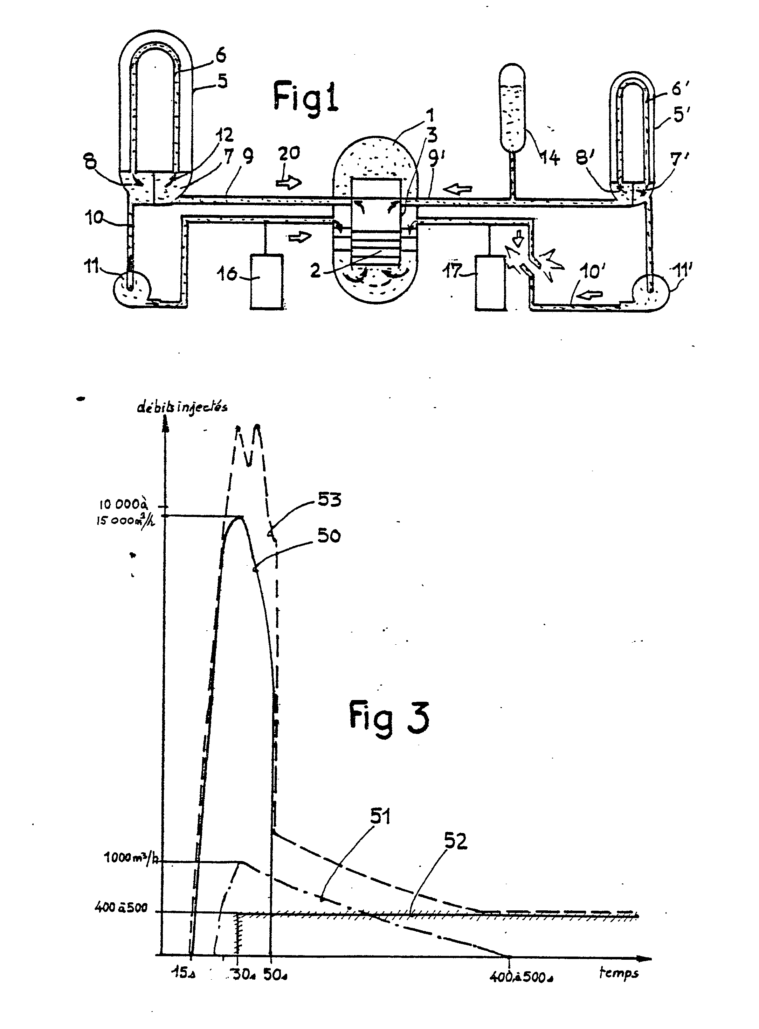

Sur la figure 1 on voit, représentée de façon schématique, la cuve 1 d'un réacteur nucléaire à eau sous pression renfermant le cœur 2 du réacteur, lui-même entouré par l'enveloppe de cœur 3 délimitant la circulation d'eau de refroidissement.

Deux boucles du circuit primaire ont été représentées, la boucle représentée à droite de la figure présentant une rupture de la canalisation de retour de l'eau primaire dans la cuve, cette partie de la boucle étant appelée branche froide.

La boucle représentée sur la gauche de la figure ne présente pas de rupture. Cette boucle comporte un générateur de vapeur 5 dont la partie inférieure en dessous de la plaque tubulaire portant le faisceau 6 est divisée en deux parties 7 et 8 en communication respectivement avec la branche chaude 9 et avec la branche froide 10 de la boucle du circuit primaire.

La branche chaude 9 est en communication à l'intérieur de la cuve avec l'intérieur de l'enveloppe 3 renfermant le cœur 2 du réacteur.

La branche froide sur laquelle est disposée une pompe primaire 11 est en communication avec la partie interne périphérique de la cuve disposée autour de l'enveloppe 3.

En fonctionnement normal du réacteur, la circulation de l'eau primaire se fait suivant les flèches 12 constituées par un simple trait. L'eau primaire s'échauffant au contact du cœur monte à l'intérieur de la partie interne de l'enveloppe 3 passe dans la branche chaude 9, dans le compartiment d'entrée 7 du générateur de vapeur, dans le faisceau 6, dans le compartiment de sortie 8 du générateur puis dans la branche froide 10 pour être introduite dans l'espace annulaire périphérique de la cuve entre l'enveloppe 3 et la paroi de celle-ci. Cette eau qui s'est refroidie pour produire de la vapeur au contact de l'eau secondaire dans le générateur de vapeur 6 descend à la partie inférieure de la cuve avant de remonter dans la partie centrale de celle-ci à l'intérieur de l'enveloppe 3 où elle s'échauffe au contact des assemblages combustibles constituant le cœur.

Pour maintenir le circuit primaire à une pression et à une température parfaitement définies, un pressuriseur 14 est disposé sur une des boucles du réacteur (sur la figure 1, par exemple le pressuriseur est disposé sur la branche chaude de la boucle de droite).

Les éléments de la boucle de droite du circuit primaire correspondant aux éléments de la boucle représentée à gauche sur la figure 1 portent les mêmes repères, mais avec le signe ' (prime).

On voit que la branche froide 10' de la boucle droite a subi une rupture avec déplacement complet de la tuyauterie, si bien que l'espace de fuite est égal à la double section de la branche du circuit primaire.

Cet accident correspond à la plus grande taille de brèche qu'on puisse imaginer et en particulier ainsi qu'il apparaîtra ci-dessous, cet accident est plus pénalisant qu'une rupture de même taille d'une branche chaude d'une des boucles du circuit primaire.

On a également représenté sur la figure 1, de façon très schématique un accumulateur moyenne pression sur chacune des boucles (repères 16 et 17), constitué chacun par une réserve d'eau de refroidissement renfermant de l'acide borique surmontée par de l'azote à 42 bars.

Ces accumulateurs sont reliés aux branches froides des boucles du circuit primaire par l'intermédiaire d'un clapet dont l'ouverture se produit lorsque la pression dans le circuit primaire tombe en dessous de 42 bars.

Dès l'apparition de la rupture sur la branche froide 10', l'eau du circuit primaire s'échappe par la canalisation rompue et la pression dans le circuit primaire tombe rapidement à des valeurs anormalement faibles.

Des signaux de contrôle et d'alarme élaborés à partir de la pression enregistrée au niveau du pressuriseur provoquent d'abord l'arrêt d'urgence du réacteur, c'est-à-dire la chute des barres de commande, puis l'injection de sécurité.

Dans le cas de ruptures de petite taille, il est possible d'introduire suffisamment d'eau, en utilisant uniquement le système de pompage, la pression dans le circuit primaire ne descend pas suffisamment pour provoquer le déclenchement des accumulateurs moyenne pression.

En revanche, pour une rupture franche d'une canalisation du circuit primaire, comme représenté sur la figure 1, la baisse de pression provoque la mise en fonctionnement des accumulateurs 16 et 17 injectant de l'eau boriquée dans les branches froides du circuit primaire.

La circulation de l'eau dans le circuit primaire en cas de rupture a été représentée par les flèches 20 constituées par un double trait.

Dans le cas d'une rupture franche située en branche froide, il apparaît au cours de la phase de décompression une inversion du débit cœur ; le débit vapeur remontant alors dans le collecteur annulaire (entre enveloppe du cœur et cuve) empêche dans un premier temps l'eau des accumulateurs moyenne pression de descendre dans la cuve, cette eau rejoignant directement la brèche en circulant autour du haut de l'enveloppe du cœur. Ce phénomène de bypass cesse vers la fin de la décompression et l'eau en provenance des trois sous-systèmes du circuit d'injection participent alors au remplissage effectif de la cuve.

Au cours de cet accident le rôle des accumulateurs moyenne pression est d'injecter un débit très important pendant un temps relativement faible correspondant au remplissage de la partie inférieure de la cuve et de la partie comprise entre l'enveloppe du cœur et la cuve. Dès que le niveau d'eau commence à s'élever dans le cœur, une production de vapeur est générée au contact des crayons combustibles. L'évacuation de cette vapeur freinée par la résistance importante constituée par les tubes des générateurs de vapeur et les pompes dans le cas de rupture branche froide, limite très fortement la vitesse de montée du niveau de l'eau dans le cœur.

Les accumulateurs moyenne pression assurent la fonction de remplissage rapide de la partie inférieure de la cuve, du collecteur annulaire (entre enveloppe de cœur et cuve) et du bas du cœur.

Il est donc nécessaire de disposer alors d'un moyen d'injection permettant de maintenir l'injection d'eau pendant un temps suffisant pour assurer le renoyage du cœur, et seulement pendant cette phase, si l'on veut faire face à tous les accidents pouvant se produire sur le circuit primaire et en particulier à une rupture d'une branche froide.

Pour tous les types de brèche, à partir du renoyage complet du cœur, les pompes d'injection permettent d'assurer l'évacuation de la puissance résiduelle et d'assurer le refroidissement du cœur à long terme, soit grâce au restant de la capacité du réservoir des piscines (phase d'injection directe), soit lorsque ce réservoir atteint un niveau bas, grâce au basculement de l'aspiration des pompes du systèmes d'injection sur les puisards de l'enceinte de confinement (phase de recirculation).

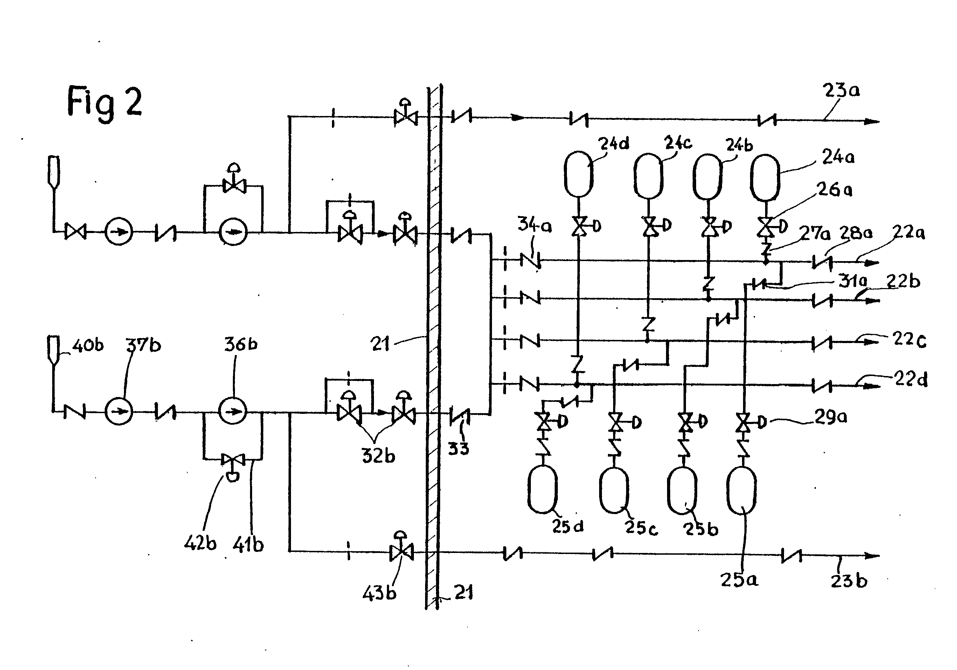

Nous allons maintenant décrire en nous référant à la figure 2 un système d'injection de sécurité suivant l'invention qui permet de faire face à une telle rupture et de réaliser le renoyage du cœur après rupture, sans faire intervenir deux systèmes de pompage additionnels disposés à l'extérieur de l'enceinte de confinement du réacteur.

Sur la figure 2, on a représenté de façon schématique le système d'injection de sécurité dont une partie est disposée à l'intérieur de l'enceinte de confinement 21 du réacteur et dont l'autre partie est située à l'extérieur.

Sur la figure 2 la partie du dispositif située à l'intérieur de l'enceinte étanche 21 est représentée à droite de celle-ci alors que la partie disposée à l'intérieur de l'enceinte 21 est située à gauche de celle-ci.

Le dispositif de refroidissement de secours représenté sur la figure 2 est associé à un réacteur nucléaire à quatre boucles de refroidissement.

On a représenté sur la figure 2, les quatre conduites 22a, 22b, 22c, 22d, qui permettent de relier les accumulateurs moyenne pression 24 et les accumulateurs basse pression 25 à chacune des branches froides du réacteur.

On a représenté également deux canalisations 23a et 23b qui permettent de relier les circuits d'injection par pompe aux branches chaudes du réacteur.

Sur chacune des conduites 22 est branché en dérivation un accumulateur moyenne pression 24 et un accumulateur basse pression 25.

Les accumulateurs moyenne pression 24 renferment chacun une réserve d'environ 30 $m^3$ d'eau à 2 000 PPM de bore sous de l'azote à une pression P1 de 25 à 30 bars.

Les accumulateurs basse pression 25 renferment chacun 20 $m^3$ d'eau à 2 000 PPM de bore sous une pression d'azote P2 de 15 bars environ.

Les accumulateurs moyenne pression 24 sont reliés aux canalisations 22 par l'intermédiaire d'une vanne 26 qui est toujours ouverte lorsque le réacteur est en fonctionnement et d'un clapet 27 associé à un clapet 28 disposé sur la canalisation 22, ces deux clapets 27 et 28 permettant l'injection de l'eau boriquée contenue dans l'accumulateur 23, dans la branche froide lorsque la pression du circuit primaire descend en dessous de la pression de l'accumulateur (25 à 30 bars).

Les accumulateurs basse pression 25 sont reliés aux canalisations 22 par l'intermédiaire d'une vanne 29 toujours ouverte lorsque le réacteur est en fonctionnement et d'un clapet 31 qui permet l'injection d'eau dans la canalisation 22 dès que la pression dans cette canalisation tombe en dessous de la pression dans l'accumulateur 25 (15 bars environ).

Les canalisations 22 sont également reliées par l'intermédiaire de vannes 32 et de clapets 33 et 34 à des lignes d'injection par pompes dont les parties actives sont disposées à l'extérieur de l'enceinte de confinement 21.

Chacune de ces lignes d'injection comporte une pompe moyenne pression 36 montée en série avec une pompe de gavage 37 qui est une pompe basse pression dont le refoulement permet l'alimentation de l'aspiration de la pompe 36.

La pompe 36 est disposée en aval de la pompe 37 par rapport à la réserve d'alimentation de ces pompes constituée par le réservoir d'alimentation des piscines du réacteur 40.

Ce réservoir renferme 3 000 $m^3$ d'eau à 3000 PPM de bore.

En dérivation sur la pompe 36 est placé un circuit de bypass 41 qui peut être fermé par une vanne 42. Ce circuit de bypass 41 permet une injection directe de l'eau boriquée dans le circuit primaire par la seule pompe basse pression 37, lorsque la vanne 42 est ouverte.

Une jonction est également possible entre l'aspiration de la pompe 37 et le puisard de l'enceinte de confinement 21 qui assure le recueil des fluides de refroidissement injectés et de la vapeur condensée dans cette enceinte 21, le refroidissement de cette eau par un autre circuit permettant à long terme sa recirculation à basse pression et à plus faible débit vers le circuit primaire.

Il existe en effet, en plus des systèmes de refroidissement par extraction de chaleur du cœur et du circuit primaire, qui ont été décrits, un système d'aspersion de l'enceinte du réacteur qui transfère et échange l'énergie extraite vers une source froide extérieure.

L'eau de refroidissement utilisée par ce système d'aspersion est recueillie par le puisard de l'enceinte de confinement en même temps que l'eau s'échappant du circuit primaire en cas de rupture de celui-ci. Ce puisard et son système de refroidissement permettent une recirculation de l'eau boriquée de refroidissement injectée dans l'enceinte de sécurité.

Les vannes 32 ainsi que la vanne 43 disposée sur la canalisation 23 permettent d'injecter l'eau de refroidissement soit dans les branches froides par l'intermédiaire des canalisations 22 soit à la fois dans les branches froides et dans les branches chaudes par l'intermédiaire des canalisations 22 et 23.

Les pompes 36 ont une pression nominale de fonctionnement de l'ordre de 100 bars pour un débit supérieur à environ 500 $m^3$ par heure.

Les pompes 37 ont une pression nominale de fonctionnement de l'ordre de 15 bars pour un débit supérieur à 500 $m^3/h$.

La mise en fonctionnement des pompes des circuits d'injection extérieurs à l'enceinte est commandée dès qu'une rupture a été décelée sur le circuit primaire.

En se référant à la figure 3, on va maintenant décrire le fonctionnement du dispositif de refroidissement de secours représenté à la figure 2 dans le cas d'une rupture franche d'une des branches froides du circuit primaire c'est-à-dire dans le cas de l'accident le plus pénalisant qui a été décrit en se référant à la figure 1.

Sur la figure 3 on a porté les débits injectés par chacun des composants du dispositif de refroidissement de secours et le débit total injecté en fonction du temps en prenant pour origine l'apparition de la rupture sur le circuit primaire.

Pour montrer l'efficacité du dispositif d'injection décrit ci-dessus on a fait les hypothèses défavorables suivantes :

— un seul ensemble de pompage 36-37 a pu être mis en fonctionnement et cet ensemble de pompage qui débite simultanément dans les quatre branches froides du réacteur a son débit utile, c'est-à-dire utilisable pour le refroidissement du cœur du réacteur, réduit d'un quart par l'eau injectée s'écoulant par la branche froide rompue du circuit primaire,

— un quart du débit d'ensemble des accumulateurs moyenne pression s'écoule par la brèche du circuit primaire et n'est pas utilisable pour le refroidissement du réacteur,

— un quart du débit des accumulateurs basse pression est également perdu par la brèche du circuit primaire du réacteur.

On a représenté la courbe de débit des accumulateurs moyenne pression 50 en traits pleins, la courbe de débit des accumulateurs basse pression 51 en traits mixtes, la courbe du débit de circuit de pompage 52 en traits pleins hachurés et enfin la courbe de débit total injecté 53 en pointillés.

On voit que vers 15 secondes après la rupture d'une branche froide du circuit primaire, les accumulateurs moyenne commencent à injecter leur réserve d'eau dans les branches froides du circuit primaire, la pression étant tombée dans ce circuit en dessous de leur pression de déclenchement.

Le débit d'injection maximum est atteint 20 à 30 secondes après l'apparition de la brèche sur le circuit primaire.

La pression dans le circuit est alors retombée à quelques bars et les accumulateurs basse pression qui ont commencé l'injection de leurs réserves d'eau dès que la pression est tombée vers 15 bars dans le circuit primaire ont alors atteint leur débit maximum. Le débit total injecté est alors à son maximum.

Cette injection à très grand débit permet, comme dans le cas de l'utilisation des dispositifs selon l'art antérieur, de remplir la partie inférieure de la cuve et en même temps de refroidir la cuve et une partie du circuit primaire et la partie basse du cœur.

Le débit injecté par les accumulateurs moyenne pression s'annule pratiquement 50 secondes après la rupture de la branche froide.

Le débit injecté par les accumulateurs basse pression décroit de façon progressive après passage par son maximum. Ceci grâce à la différence de pression plus faible entre l'accumulateur et le circuit primaire, qui est pratiquement à la pression de l'ambiance du bâtiment réacteur.

Le débit de ces accumulateurs basse pression ne s'annule pratiquement que vers 400 à 500 secondes après l'apparition de la rupture.

Avant la fin d'injection des accumulateurs moyenne pression, les pompes du circuit d'injection ont été mises en fonctionnement fournissant un débit additionnel constant au cours du temps qui s'ajoute au débit des accumulateurs basse pression.

Après 50 secondes le débit injecté n'est plus constitué que par le débit des accumulateurs basse pression et le circuit de pompage.

L'apport de débit de 50 secondes à 450/500 secondes par les accumulateurs basse pression complète l'apport de débit du système de pompage pour assurer la remontée plus rapide du niveau d'eau dans le cœur du réacteur, en conservant la hauteur de charge hydraulique motrice entre l'enveloppe du cœur et la cuve.

Le rôle des accumulateurs basse pression est alors d'assurer le complément du débit des pompes moyenne pression dans la fonction de renoyage du cœur, par un débit relativement faible mais pendant une durée suffisante pour assurer le noyage complet du cœur.

Ensuite, le circuit de pompage agit seul pour effectuer le refroidissement du réacteur sur une longue période.

Si la pression est faible (brèche de taille importante), les pompes d'injection moyenne pression sont bi-passées et la recirculation de l'eau est seulement assurée par les pompes de gavage.

On voit donc qu'on a pu réaliser les différentes fonctions : refroidissement rapide et remplissage partiel de la cuve, renoyage complet du cœur et refroidissement de longue durée de la cuve avec un ensemble d'accumulateurs de pression et un seul ensemble de pompage, grâce au débit étalé dans le temps des accumulateurs basse pression, pendant la phase de renoyage du cœur du réacteur.

Dans le cas du dispositif selon l'invention, l'association d'une pompe moyenne pression 36 à une pompe de gavage 37 permet d'assurer un débit suffisant pour compenser la perte d'eau primaire dans le cas d'une brèche petite ou moyenne et pour éviter le passage du cœur à un état de dénoyage c'est-à-dire à un état où le cœur n'est plus plongé dans l'eau de refroidissement.

Dans le cas d'une brèche petite ou moyenne, le dispositif suivant l'invention permet d'éviter le passage du cœur à un état dénoyé, uniquement en faisant intervenir le système de pompage à l'exclusion des accumulateurs moyenne et basse pression.

Les performances améliorées du système de pompage de l'invention permettent d'abaisser la pression de déclenchement des accumulateurs moyenne pression de 40 bars à environ 25 à 30 bars, ce qui représente une économie pour la conception des accumulateurs.

Une pression de déclenchement relativement élevée des accumulateurs moyenne pression était nécessaire dans les dispositifs de l'art antérieur, dans le cas d'un accident d'une importance moindre qu'une rupture franche d'une branche froide du circuit primaire car le débit d'injection des systèmes de pompage ne permettait pas de limiter suffisamment la phase de dénoyage du cœur.

Dans le cas d'une rupture franche d'une branche froide du circuit primaire, la pression chutant rapidement dans ce circuit, l'injection à une pression relativement forte par les accumulateurs moyenne pression ne présente pas d'intérêt.

Dans le cas d'une petite ou moyenne brèche dans le circuit primaire ou d'une rupture de tuyauterie vapeur, on assure l'appoint par injection d'eau à l'aide des pompes d'injection à moyenne pression alimentées par les pompes de gavage, elles-mêmes alimentées par l'eau de refroidissement du réservoir des piscines du réacteur pendant toute la phase de décompression du circuit primaire.

Enfin, à plus longue durée, le refroidissement a lieu par circulation avec injection à la fois dans les branches froides et dans les branches chaudes par les pompes basse pression avec recirculation de l'eau récupérée dans le puisard de l'enceinte de sécurité.

Enfin, dans le cas d'une brèche importante dans le circuit primaire, telle qu'une rupture franche d'une branche froide après que le renoyage du cœur ait été réalisé, le refroidissement a plus longue durée a également lieu uniquement par circulation d'eau grâce au circuit de pompage avec récupération de l'eau dans le puisard de l'enceinte de confinement.

Cette recirculation peut être assurée uniquement par les pompes de gavage à basse pression, les vannes 42 permettant de court-circuiter les pompes moyenne pression étant ouvertes.

L'injection peut être réalisée par circulation uniquement dans les branches froides ou par circulation à la fois dans les branches chaudes et dans les branches froides, par ouverture des vannes 43.

On voit donc que le dispositif de refroidissement de secours suivant l'invention permet de réaliser toutes les fonctions nécessaires quel que soit l'accident survenant sur le circuit primaire du réacteur, en utilisant un seul système d'injection comportant des éléments actifs disposés en dehors de l'enceinte de sécurité et deux ensembles d'accumulateurs dont les pressions de déclenchement sont différentes.

Le déclenchement de l'ensemble d'accumulateurs basse pression permet d'assurer le renoyage du cœur après décompression du circuit primaire.

L'invention ne se limite pas au mode de réalisation qui vient d'être décrit, elle en comporte au contraire toutes les variantes.

C'est ainsi qu'on peut imaginer l'utilisation d'accumulateurs d'un type quelconque, à partir du moment où leur déclenchement automatique par baisse de pression dans le circuit primaire est possible.

On peut également imaginer l'utilisation de deux ensembles d'accumulateurs à pressions de déclenchement différentes avec un circuit d'injection ayant des moyens de pompage disposés en dehors de l'enceinte, d'un type quelconque.

La disposition de deux pompes en série sur ce circuit de pompage a cependant l'avantage de permettre un fonctionnement de l'installation à grand débit et à moyenne pression en même temps qu'un fonctionnement à grand débit et à faible pression en utilisant uniquement l'une des pompes qui est une pompe à basse pression et en court-circuitant l'autre pompe.

Enfin, le dispositif de refroidissement de secours suivant l'invention s'applique à tous les types de réacteur nucléaire à eau sous pression, quel que soit le nombre de boucles du circuit primaire.

**Revendications**

1. Dispositif de refroidissement de secours d'un réacteur nucléaire à eau sous pression, par injection d'un liquide de refroidissement dans le circuit primaire du réacteur, en cas de fuite sur ce circuit primaire, comportant au moins un double circuit d'injection équipé d'un moyen de pompage (36, 37) disposé à l'extérieur de l'enceinte de sécurité (21) du réacteur et au moins un ensemble d'accumulateurs (24, 25) contenant une certaine quantité de liquide de refroidissement sous pression disposés à l'intérieur de l'enceinte de sécurité (21) du réacteur et communiquant avec les branches froides du circuit primaire par où l'eau sous pression arrive à la cuve du réacteur, par l'intermédiaire d'un clapet dont l'ouverture provoque l'injection de liquide de refroidissement dans le circuit primaire, caractérisé par le fait qu'il comporte, en dérivation sur chacune des branches froides du circuit primaire, avec interposition d'un clapet (27, 31) et indépendamment l'un de l'autre :
— un premier accumulateur (24) de liquide réfrigérant à une première pression P1 inférieure à la pression nominale du circuit primaire,
— et un second accumulateur (25) de liquide réfrigérant à une seconde pression P2 faible, inférieure à la pression P1,
— l'injection de liquide réfrigérant par l'un et l'autre des accumulateurs (24, 25) dans le circuit primaire étant provoquée par l'ouverture automatique des clapets correspondants (27, 31), lorsque la pression dans le circuit primaire tombe en dessous de P1 et en dessous de P2 respectivement, et que le moyen de pompage de chacun des circuits doubles d'injection comporte :
— deux pompes (36, 37) disposées en série sur une canalisation communiquant à l'amont avec une réserve de liquide de réfrigération (40) et à l'aval avec le circuit primaire du réacteur, la pompe (36) disposée à l'aval ayant une pression nominale de fonctionnement très supérieure à la pression nominale de fonctionnement de la pompe (37) disposée en amont dont le refoulement est en communication avec l'aspiration de la pompe (36) disposée à l'aval, une portion de circuit (41) en dérivation par rapport à la pompe située en aval, munie d'une vanne de fermeture (42) permettant également la mise en communication directe de la pompe d'amont (37) avec le circuit primaire.

2. Dispositif de refroidissement de secours suivant la revendication 1, caractérisé par le fait que, dans le cas d'un réacteur nucléaire dont le circuit primaire est à une pression voisine de 155 bars, la pression P1 est comprise entre 25 et 30 bars et la pression P2 voisine de 15 bars.

3. Dispositif de refroidissement de secours suivant l'une quelconque des revendications 1 et 2, caractérisé par le fait que chacun des circuits d'injection équipé de moyens de pompage (36, 37) est relié aux branches froides du circuit primaire et à au moins une branche chaude de ce circuit, c'est-à-dire à une conduite du circuit primaire par où l'eau primaire échauffée au contact du cœur peut être emmenée vers les générateurs de vapeur.

## Claims

1. Emergency cooling device for a pressurized water nuclear reactor, by the injection of a cooling liquid into the primary circuit of the reactor, in the event of leakage in this primary circuit, comprising at least one double injection circuit equipped with pump means (36, 37) arranged outside the safety enclosure (21) of the reactor and at least one set of accumulators (24, 25) containing a certain amount of cooling liquid under pressure arranged inside the safety enclosure (21) of the reactor and communicating with the cold branches of the primary circuit through which the pressurized water arrives in the reactor vessel, through a valve whose opening causes the injection of cooling liquid into the primary circuit, characterized by the fact that it comprises, bypassing each of the cold branches of the primary circuit, with the interposition of a valve and independently of one another :
— a first accumulator (24) of cooling liquid at a first pressure P1 less than the normal pessure of the primary circuit,
— and a second accumulator (25) of cooling liquid at a second pressure P2 less than the pressure P1,
— the injection of cooling liquid through one and other of the accumulators (24, 25) in the primary circuit being caused by the automatic opening of the corresponding valves (27, 31), when the pressure in the primary circuit falls below P1 and below P2 respectively, and that the pump means of each of the double injection circuits comprises :
— two pumps (36, 37) arranged in series in a pipe communicating upstream with a refrigeration liquid reserve (40) and downstream with the primary circuit of the reactor, the pump (36) arranged downstream having a rated operating pressure very much higher than the rated operating pressure of the pump (37) arranged upstream whose delivery is in communication with the suction side of the pump (36) arranged downstream, a portion of circuit (41) by-passed with respect to the pump situated dowstream, provided with a closing valve (42) also enabling the placing of the upstream pump (37) in direct communication with the primary circuit.

2. Emergency cooling device according to claim 1, characterized by the fact that, in the case of a nuclear reactor whose primary circuit is at a pressure in the vicinity of 155 bars, the pressure P1 is comprised between 25 and 30 bars and the pressure P2 in the vicinity of 15 bars.

3. Emergency cooling device according to claim 1 or 2, characterized by the fact that each of the injection circuits equipped with pump means (36, 37) is connected to the cold branches of the primary circuit and to at least one hot branch of this circuit, that is to say to a pipe of the primary circuit through which primary water heated in contact with the core can be led to the steam generators.

## Patentansprüche

1. Vorrichtung zur Notkühlung eines Druckwasserreaktors durch Einspritzen einer Kühlflüssigkeit in den Primärkreis des Reaktors im Fall eines Lecks an diesem Primärkreis, mit wenigstens einem doppelten Einspritzkreis einschließlich einer Pumpeinrichtung (36, 37) außerhalb des Sicherheitsbehälters (21) des Reaktors und wenigstens einer Anordnung von Speichern (24, 25), die eine gewisse Menge an unter Druck stehender Kühlflüssigkeit enthalten, innerhalb des Sicherheitsbehälters (21) des Reaktors angeordnet sind und mit den kalten Zweigen des Primärkreises verbunden sind, von wo aus das unter Druck stehende Wasser am Reaktorbehälter über ein Klappenventil ankommt, dessen Öffnen das Einspritzen der Kühlflüssigkeit in den Primärkreis bewirkt, dadurch gekennzeichnet, daß sie als Abzweigung an jedem der kalten Zweige des Primärkreises unter Zwischenschaltung eines Klappenventils (27, 31) und voneinander unabhängig enthält :
— einen ersten Speicher (24) für Kühlflüssigkeit mit einem ersten Druck P1, der kleiner als der Nenndruck des Primärkreises ist, und
— einen zweiten Speicher (25) für Kühlflüssigkeit mit einem geringen zweiten Druck P2, der kleiner als der Druck P1 ist,
— wobei die Einspritzung von Kühlflüssigkeit durch den einen oder anderen der Speicher (24, 25) in den Primärkreis durch das automatische Öffnen der entsprechenden Klappenventile (27, 31) herbeigeführt wird, wenn der Druck im Primärkreis unter P1 bzw. unter P2 fällt, und daß die Pumpeinrichtung jeder der doppelten Einspritzkreise enthält :
— zwei Pumpen (36, 37), die in einer Rohrleitung hintereinander angeordnet sind und stromauf mit einem Kühlflüssigkeitsvorrat (40) und stromab mit dem Primärkreis des Reaktors in Verbindung stehen, wobei die stromab angeordnete Pumpe (36) einen Nennbetriebsdruck hat, der viel größer als der Nennbetriebsdruck der stromauf angeordneten Pumpe (37) ist, deren Förderseite mit der Saugseite der stromab angeordneten Pumpe (36) in Verbindung steht, wobei ein gegenüber der stromab angeordneten Pumpe abgezweigter Kreisabschnitt (41) mit einem Schließventil (42) versehen ist und ebenfalls die unmittelbare Verbindung der stromauf angeordneten Pumpe (37) mit dem Primärkreis ermöglicht.

2. Notkühlvorrichtung nach Anspruch 1, dadurch gekennzeichnet, daß im Fall eines Kernreaktors, dessen Primärkreis sich auf einem Druck von etwa 155 bar befindet, der Druck P1 25 bis 30 bar und der Druck P2 etwa 15 bar betragen.

3. Notkühlvorrichtung nach einem der Ansprüche 1 und 2, dadurch gekennzeichnet, daß jeder der mit einer Pumpeinrichtung (36, 37) versehenen Einspritzkreise mit den kalten Zweigen des Primärkreises und mit wenigstens einem heißen Zweig dieses Kreises verbunden ist, d. h. mit einer Leitung des Primärkreises, von wo aus das in Berührung mit dem Reaktorkern erhitzte Primärwasser zu den Dampfgeneratoren abgeleitet werden kann.

Fig 1

Fig 3

Fig 2